Europäisches Patentamt

(19) European Patent Office

Office européen des brevets

(11) Veröffentlichungsnummer : **0 303 148 B1**

(12) EUROPÄISCHE PATENTSCHRIFT

(45) Veröffentlichungstag der Patentschrift :
05.06.91 Patentblatt 91/23

(51) Int. Cl.⁵ : **F16C 25/08,** F16F 1/32

(21) Anmeldenummer : **88112487.9**

(22) Anmeldetag : **01.08.88**

(54) **Gewellte, aus einem planen Blechteil geformte Federscheibe zur axialen Verspannung eines Kugellagers gegenüber einer Lageraufnahme-Schulter.**

(30) Priorität : **12.08.87 DE 3726887**

(43) Veröffentlichungstag der Anmeldung :
**15.02.89 Patentblatt 89/07**

(45) Bekanntmachung des Hinweises auf die
Patenterteilung :
**05.06.91 Patentblatt 91/23**

(84) Benannte Vertragsstaaten :
**AT CH DE FR GB IT LI SE**

(56) Entgegenhaltungen :
**DE-A- 2 600 946**
**DE-A- 3 344 249**
**FR-A- 391 527**

(73) Patentinhaber : **Siemens Aktiengesellschaft**
**Wittelsbacherplatz 2**
**W-8000 München 2 (DE)**

(72) Erfinder : **Wustmann, Oswald**
**Mühlweg 28**
**W-8708 Gerbrunn (DE)**

**Beschreibung**

Die Erfindung bezieht sich auf eine gewellte, aus einem planen Blechteil geformte Federscheibe zur axialen Verspannung eines Kugellagers gegenüber einer Lageraufnahme-Schulter gemäß Oberbegriff des Anspruches 1 ; eine derartige in einer Lageraufnahme gehaltene Federscheibe ist aus der DE-OS 33 44 249, FIG 5 bekannt.

Die bekannten Federscheiben bestehen aus einem in Umfangsrichtung wellig verlaufenden Scheibenring mit über den Umfang abwechselnd aufeinanderfolgenden Wellenbergen und Wellentälern ; derartige Federscheiben werden üblicherweise zunächst als planes Scheibenring-Blechteil gestanzt, das anschließend durch Eindrücken der Wellenberge bzw. Wellentäler gewellt wird. Die Federscheiben dienen dazu, die Außenringe von Kugellagern gegenüber deren Innenringen axial derart zu belasten, daß in jedem Betriebszustand spielfreie definierte Laufbahnen für die Kugeln gewährleistet werden können; gleichzeitig können durch die sich an der das Kugellager aufnehmenden Lagernabe axial abstützende Federscheibe Axialspiele des auf der Welle gelagerten Rotrkörpers ausgeglichen werden, die durch Toleranzwerte der zusammengebauten Stator-Bauteile oder Betriestemperaturwechsel bedingt sind.

Bei der Montage bzw. im Betriebszustand werden die mit ihren Wellenbergen auf der einen axialen Seite z.B. am Außenring des anzustellenden Kugellagers bzw. mit ihren Wellentälern an der anderen axialen Seite an der Lageraufnahme-Schulter anliegenden Federscheiben axial entgegen ihrer Federkraft um ein geringes Maß zusammengedrückt, wobei die Anlage-Umfangsflächen im Bereich der Wellenberge bzw. Wellentäler um ein geringes radiales Maß entlang der Lageraufnahme-Schulter bzw. dem Außenring des Kugellagers gleiten.

Aufgabe der vorliegenden Erfindung ist es, mit einfachen fertigungstechnischen und konstruktiven Mitteln unter Berücksichtigung sämtlicher Toleranzmaße und Betriebszustände eine definierte Anstellkraft, d.h. eine definierte axiale Andrückkraft an den Außenring des Kugellagers durch die sich an der LageraufnahmeSchulter abstützende Federscheibe gewährleisten zu können ; das bedingt, daß sich die Federscheibe mit ihrer axialen Verspannung jedem Abstandsmaß zwischen Lageraufnahme-Schulter und Außenring des Kugellagers anpassen kann.

Ausgehend von der Erkenntnis, daß Voraussetzung für eine derartige definierte Anstellkraft u.a. eine ungehinderte radiale Gleitmöglichkeit zwischen der Lageraufnahme-Schulter und der andrückenden Anlage-Umfangsteilfläche der Federscheibe ist, wird die vorgenannte Aufgabe bei einer gewellten Federscheibe der eingangs genannten Art erfindungsgemäß durch die Lehre des Anspruches 1 gelöst ; vorteilhafte Ausgestaltungen der Erfindung sind jeweils Gegenstand der Unteransprüche.

Aufgrund der erfindungsgemäßen Maßnahme kann gewährleistet werden, daß handelsübliche, als Stanz-Biege-Teile bzw. Stanz-Präge-Teile in Großserie auf einfachste Weise gefertigte Federscheiben trotz des bei der Herstellung an den Kanten entstehenden Stanzgrates und auch bei z.B. lediglich gegossenen und keiner Nachbearbeitung unterworfenen Lageraufnahmen trotzdem unter axialem Druck radial an der Lageraufnahme-Schulter verhakungsfrei gleiten und somit in sämtlichen Betriebszuständen eine definierte Einstellkraft gewährleisten können.

Zweckmäßigerweise sind die Gleitrundungen nur im Bereich der Anlage-Umfangsteilflächen an der Außenkante des Federringes vorgesehen, während die übrigen Umfangsflächenteile in üblicher Weise aus einem lediglich in Umfangsrichtung gewellten ansonsten jedoch planen Blechstreifen bestehen, so daß die Einhaltung einer definierten axialen Federkraft bei mehr oder weniger axial zusammengedrückter Federscheibe durch die Gleitrundungen praktisch nicht beeinflußt wird.

In fertigungstechnisch einfacher Weise werden die erfindungsgemäß ein- bzw. angeformten Gleitrundungen gleichzeitig in der an sich bekannten Fertigungsstufe "Aufwellen" der zuvor als planer Scheibenring gestanzten Federscheibe hergestellt ; dazu müssen z.B. in dem für das Aufwellen des planen Scheibenrings vorgesehene Werkzeug lediglich Matrize und Prägestempel mit den zusätzlichen Gleitrundungen versehen werden.

Die Erfindung swie weitere vorteilhafte Ausgestaltungen werden im folgenden anhand eines im schematisch dargestellten Ausführungsbeispiel in der Zeichnung näher erläutert ; darin zeigen :

FIG 1 in einem Teilschnittbild eine in einer Lageraufnahme über Kugellager gelagerte Rotorwelle eines Elektromotors, das mittels einer Federscheibe angestellt ist ;

FIG 2 eine axiale Draufsicht auf eine einzelne Federscheibe ;

FIG 3 die Seitenansicht der Federscheibe gemäß FIG 2 ;

FIG 4 einen Teilschnitt durch eine Federscheibe mit hochgebogener Gleitrundung ;

FIG 5 einen Teilschnitt einer Federscheibe mit angeprägter Anschrägung.

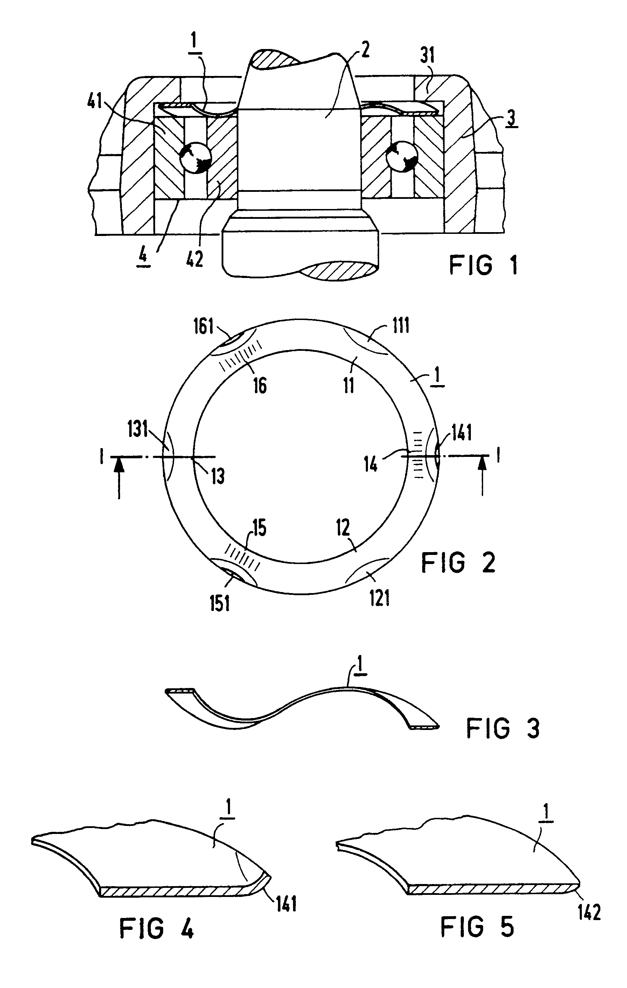

FIG 1 zeigt in einem Teilschnittbild eine Rotorwelle 2 eines Elektromotors, die über ein Kugellager 4 mit Außenring 41 und Innenring 42 in einer Lageraufnahme 3 des Stators des Elektromotors drehbar gelagert ist. Zur sogenannten Anstellung des Kugellagers 4 dient eine Federscheibe 1 zwischen dem Außenring 41 des Kugellagers 4 und der Anlageschulter 31 der Lageraufnahme 3.

FIG 2 zeigt eine axiale Draufsicht auf eine Federscheibe 1, die in FIG 1 gemäß Schnittverlauf I-I gezeichnet ist. FIG 3 zeigt eine Seitenansicht der in FIG 2 in axialer Draufsicht dargestellten Federscheibe.

Die Federscheibe 1 besteht im wesentlichen aus einem aus einem planen Blech gestanzten und anschließend gewellten Scheibenring mit in Umfangsrichtung aufeinanderfolgenden Wellenbergen 11, 12, 13 und dazwischenliegenden Wellentälern 14, 15, 16. Bei der hier gewählten Darstellung liegt die Federscheibe mit ihren Wellenbergen 11, 12, 13 axial an der Lageraufnahme-Schulter 31 und mit ihren Wellentälern 14, 15, 16 am Außenring 41 des Kugellagers 4 an. Beim axialen Zusammendrücken der Federscheibe 1 zwischen dem Außenring 41 des Kugellagers 4 einerseits und der Lageraufnahme-Schulter 31 andererseits gleitet die Federscheibe 1 mit ihren Anlage-Umfangsteilflächen u.a. im Bereich der Wellenberge 11, 12, 13 radial entlang der Lageraufnahme-Schulter 31. Um dabei ein verhakungsfreies Gleiten gewährleisten zu können, ist die gewellte Federscheibe im Bereich der Anlage-Umfangsteilflächen an ihren radialen Außenkanten mit angeformten Gleitrundungen 111, 121, 131 versehen.

Um in vorteilhafter Weise die gewellte Federscheibe als symmetrisches, durch Handhabungsautomaten einfach zu montierendes Bauteil ausbilden zu können, sind entsprechende Gleitrundungen 141, 151, 161 auch im Bereich der Wellentäler vorgesehen, obowhl die Gefahr einer Verkantung bei Gleitung an den Stirnflächen des Außenringes 41 des Kugellagers 4 an sich nicht besteht.

FIG 4, 5 zeigen in einem Teilschnittbild und in vergrößerter Ausschnittdarstellung zwei verschiedene Ausführungsfrmen der erfindungsgemäß vorgesehenen Gleitrundungen. FIG 4 zeigt jeweils im Bereich eines Wellentales 14 eine abgebogene Gleitrundung 141 während FIG 5 eine angeprägte Gleitanschrägung 142 darstellt. Beide, auf einfache Weise gleichzeitig mit dem Fertigungsschritt "Aufwellen" einbiegbaren bzw. einprägbaren Gleitrundungen gewährleisten, auch bei rauher Gleitoberfläche der z.B. als Gußteil hergestellten Lageraufnahme-Schulter 31, eine freie Gleitbeweglichkeit und damit eine definierte Anstellkraft der gewellten Federscheibe 1 bei sich veränderndem axialen Anpreßdruck.

**Ansprüche**

1. Gewellte, aus einem planen Blechteil geformte Federscheibe zur axialen Verspannung eines Kugellagers gegenüber einer Lageraufnahme-Schulter, gegen welche die Federscheibe mit Anlage-Umfangsteilflächen entsprechend ihrer Zahl von über den Umfang verteilten Wellentälern bzw. Wellenbergen anliegt, **dadurch gekennzeichnet**, daß die radialen Außenkanten der Federscheibe (1) im Bereich der Anlage-Umfangsteilflächen (Wellenberge 11, 12, 13 bzw. Wellentäler 14, 15, 16) im Sinne einer verkantungsfreien Radialbeweglichkeit gegenüber der Lageraufnahme-Schulter (31) mit ein- bzw. angeformten Gleitrundungen (111, 121, 131 bzw. 141, 151, 161) bzw. Gleitanschrägungen (142) versehen sind.

2. Gewellte Federscheibe nach Anspruch 1, **dadurch gekennzeichnet**, daß die Umfangsflächen außerhalb der Anlage-Umfangsteilflächen gleitrundungsfrei ausgebildet sind.

3. Gewellte Federscheibe nach Anspruch 1 und-/oder 2, **dadurch gekennzeichnet**, daß die radialen Außenkanten mit hochgebogenen Rundungen bzw. Anschrägungen versehen sind. (FIG 4)

4. Gewellte Federscheibe nach einem der Ansprüche 1 bis 3, **dadurch gekennzeichnet**, daß die radialen Außenkanten mit eingeprägten Rundungen bzw. Anschrägungen versehen sind. (FIG 5)

5. Gewellte Federscheibe nach einem der Ansprüche 1 bis 3, **dadurch gekennzeichnet**, daß die Rundungen bzw. Anschrägungen gleichzeitig mit den Wellertälern bzw. Wellenbergen angebogen bzw. eingeprägt sind.

**Claims**

1. Corrugated spring washer formed from a planar sheet metal portion for axially bracing a ball bearing in relation to a bearing-receiving shoulder, against which the spring washer rests with peripheral partial seating surfaces according to its number of wave troughs or wave crests which are distributed over the periphery, characterised in that the radial outer edges of the spring washer (1) are provided with sliding rounded portions (111, 121, 131 or 141, 151, 161) or sliding chamfers (142) formed therein or thereon in the region of the peripheral partial seating surfaces (wave crests 11, 12, 13 or wave troughs 14, 15, 16) for the purposes of tilt-free radial mobility in relation to the bearing-receiving shoulder (31).

2. Corrugated spring washer according to claim 1, characterised in that the peripheral surfaces outside the peripheral partial seating surfaces are formed in a manner free of sliding rounded portions.

3. Corrugated spring washer according to claim 1 and/or 2, characterised in that the radial outer edges are provided with upturned rounded portions or chamfers (Figure 4).

4. Corrugated spring washer according to one of the claims 1 to 3, characterised in that the radial outer edges are provided with impressed rounded portions or chamfers (Figure 5).

5. Corrugated spring washer according to one of the claims 1 to 3, characterised in that the rounded portions or chamfers are bent thereon or impressed at the same time as the wave crests or wave troughs respectively.

## Revendications

1. Rondelle élastique ondulée, formée à partir d'une pièce de tôle plane et destinée au blocage axial d'un roulement à billes par rapport à un épaulement de réception du roulement, contre lequel la rondelle élastique s'applique par des surfaces périphériques partielles de contact correspondant au nombre de ses creux d'ondulation et de ses sommets d'ondulation répartis sur la périphérie, caractérisée en ce que les bords extérieurs radiaux de la rondelle élastique (1) sont munis, dans la région des surfaces périphériques partielles de contact (sommets des ondulations 11, 12, 13 et creux des ondulations 14, 15, 16), et en vue d'une possibilité de déplacement radial sans coincement par rapport à l'épaulement de réception du roulement (31), d'arrondis en creux ou en saillie (111, 121, 131 et 141, 151, 161) ou de parties obliques (142) facilitant le glissement.

2. Rondelle élastique ondulée suivant la revendication 1, caractérisée

en ce que les surfaces périphériques, en-dehors des surfaces périphériques partielles de contact, sont constituées sans arrondi facilitant le glissement.

3. Rondelle élastique ondulée suivant la revendication 1 et/ou 2, caractérisée

en ce que les bords extérieurs radiaux sont munis d'arrondis recourbés vers le haut ou de parties obliques (figure 4).

4. Rondelle élastique ondulée suivant l'une des revendications 1 à 3, caractérisée

en ce que les bords extérieurs radiaux sont munis d'arrondis estampés ou de parties obliques (figure 5).

5. Rondelle élastique ondulée suivant l'une des revendications 1 à 3, caractérisée

en ce que les arrondis et les parties obliques sont recourbés ou estampés en même temps que les creux des ondulations ou que les sommets des ondulations.

FIG 1

FIG 2

FIG 3

FIG 4

FIG 5